# EUROPÄISCHE PATENTSCHRIFT

(11) **EP 1 864 164 B1**
(45) Veröffentlichungstag und Bekanntmachung des Hinweises auf die Patenterteilung: **23.01.2013**
(21) Anmeldenummer: 06725040.7
(22) Anmeldetag: 14.03.2006
(51) Int. Cl.: G02B 6/00, F21V 8/00, H01C 10/14, H01H 19/02

(54) **FORMTEIL ALS OPTISCHER LICHTLEITER**
MOLDED PART FOR USE AS AN OPTICAL WAVEGUIDE
PIECE MOULEE UTILISEE COMME GUIDE D'ONDES OPTIQUES

(30) Priorität: 31.03.2005 DE 102005014770
(43) Veröffentlichungstag der Anmeldung: 12.12.2007
(73) Patentinhaber: Siemens Aktiengesellschaft, 80333 München (DE)
(72) Erfinder: EICHHORNER, Bernhard, A-1210 Wien (AT); PEPRNY, Wolfgang, A-1210 Wien (AT); PETRICEK, Martin, A-2020 Hollabrunn (AT)
(86) Internationale Anmeldenummer: PCT/EP2006/060684
(87) Internationale Veröffentlichungsnummer: WO 2006/103160

(56) Entgegenhaltungen:
- EP-A- 0 415 147
- EP-A2- 0 406 845
- DE-A1- 10 225 016
- JP-A- 63 172 299
- US-A- 5 876 239
- US-A1- 2002 097 569
- PATENT ABSTRACTS OF JAPAN Bd. 1996, Nr. 11, 29. November 1996 (1996-11-29) & JP 08 184713 A (FUJITSU LTD), 16. Juli 1996 (1996-07-16) in der Anmeldung erwähnt

## Beschreibung

Die vorliegende Erfindung betrifft einen Formteil aus transparentem Material zum Leiten eines Lichtstrahls von einer, auf einer Schaltungsplatte angebrachten Lichtquelle.

Es ist seit langem bekannt, dass ein Formteil aus einem transparenten Plastikmaterial wie einem Akrylharz als optischer Lichtleiter zur Leitung eines Lichtstrahls verwendet werden kann. Obwohl das meist stabförmige transparente Formteil zur Verwendung bei der Lichtübertragung über große Entfernungen, wie sie etwa durch optische Glasfasern erreicht wird, ungeeignet ist, wird das transparente Formteil oft verwendet, um einen von einer Lichtquelle, wie beispielsweise einer Leuchtdiode, emittierten Lichtstrahl zu irgendeinem gewünschten Ort zu leiten.

Zum Beispiel verwendet eine elektronische Einrichtung wie ein Schaltnetzteil wenigstens eine Lichtquelle als Statusanzeiger, der zum Beispiel eine visuelle Anzeige dafür liefert, ob eine bestimmte Ausgangsspannung vorhanden ist oder nicht. Je nach dem Typ der elektronischen Einrichtung und/oder dem Typ der Lichtquelle ist die Lichtquelle oft fest auf einer Schaltungsplatte angeordnet und ein Anzeigefenster ist in einem, die Schaltungsplatte umschließenden Gehäuse integriert. Wo eine wesentliche Distanz zwischen der Lichtquelle auf der Schaltungsplatte und dem Anzeigefester in dem Gehäuse besteht, wird das transparente Formteil im allgemeinen eingesetzt, um einen Lichtstrahl von der Lichtquelle zu dem Anzeigefenster zu leiten, derart, dass ein Benutzer oder das Betriebspersonal durch einen Blick durch das Anzeigefester feststellen kann, ob die Lichtquelle mit elektrischem Strom versorgt wird oder nicht.

Die japanische Patentveröffentlichungsschrift JP8184713, veröffentlicht am 16.07.1996, beschreibt ein monolithisches Formteil aus einem transparenten Plastikmaterial, das relativ zueinander in Winkeln angeordnete lange und kurze Körper aufweist. Das in dieser Schrift beschriebene Formteil wird in einem Personal Computer als Statusanzeiger verwendet und ist derart aufgebaut, dass ein von einer Leuchtdiode emittierter Lichtstrahl aus zwei quer zueinander verlaufenden Richtungen gesehen werden kann. Dabei pflanzt sich der Lichtstrahl von einer Lichtaufnahmeseite zu der Lichtemissionsseite bzw. den Lichtemissionsseiten fort, unabhängig von der Anzahl der in dem Formteil stattfindenden Reflexionen.

Bei elektronischen Einrichtungen wie einem Schaltnetzteil kommt es oft vor, dass in der Nähe einer als Statusanzeiger genutzten Lichtquelle auf der Schaltungsplatte ein Bauelement mit Bedienfunktionen der elektronischen Einrichtung angeordnet ist. Das kann beispielsweise ein Potentiometer oder ein sonstiges Bedienelement sein, mit dem ein Benutzer oder das Betriebspersonal Einstellungen an der elektronischen Einrichtung vornehmen kann. Derartige Bedienelemente weisen dabei Betätigungseinrichtungen wie Stellschrauben, Schalter, Taster oder ähnliches auf, auf die während eines Betätigungsvorganges Kräfte, meist quer zur Applikationsrichtung des Bedienelements, ausgeübt werden. Zudem sind derartige Bedienelemente im Allgemeinen so ausgebildet, dass sie vor einem Lötvorgang nicht von selbst in einer vorgegebenen Position halten. Nach dem Stand der Technik werden derartige Bedienelemente deshalb vor einer Kontaktierung mit Leitern auf der Schaltungsplatte auf die Oberfläche der Schaltungsplatte aufgeklebt. Dieser Klebevorgang hat den Nachteil, dass dafür ein eigener Arbeitsschritt notwendig ist.

Es ist deshalb auch bekannt, ein Bedienelement während eines Lötvorgangs mittels einer Vorrichtung in der gewünschten Position zu fixieren. Neben dem Nachteil, dass eine solche Vorrichtung eigens bereitgestellt werden muss, ist ein so montiertes Bedienelement dann nur über gelötete Anschlussbeinchen ohne zusätzliche Abstützeinrichtungen auf der Schaltungsplatte fixiert, wodurch die Gefahr einer Beschädigung der Kontakte bei Krafteinwirkung auf die Betätigungseinrichtung des Bedienelements besteht.

Oft werden die Beidienelemente von elektrischen Einrichtungen wie Schaltnetzteilen nur durch Aufschriften am Gehäuse kenntlich gemacht. Dadurch ergibt sich für einen Benutzer oder das Betriebspersonal oft der Nachteil, dass die Betätigungseinrichtungen dieser Bedienelemente im montierten Zustand, z.B. in Schaltschränken, nur schwer erkennbar sind. Nach dem Stand der Technik kennt man deshalb Anordnungen, bei denen Betätigungseinrichtungen durch in unmittelbarer Nähe angeordnete Lichtquellen beleuchtet werden.

In der deutschen Patentveröffentlichungsschrift DE10225016, veröffentlicht am 08.01.2004, wird ein Formteil aus transparentem Plastik als Lichtleiter für die Beleuchtung eines Betätigungsknopfs beschrieben. Dabei ist ein Betätigungselement, bestehende aus einem Körper zur Aufnahme der elektrischen Funktion, einer aus dem Körper herausragenden Betätigungseinrichtung sowie einer Platine mit wenigstens einer Leuchtdiode und einem ringförmigen Formkörper als Lichtleiter, in einer Öffnung einer Gehäusewand montiert. Für den Einsatz in einer elektronischen Einrichtung wie einem Schaltnetzteil ergibt sich dabei der Nachteil, dass zur Beleuchtung der Betätigungseinrichtung eine eigene Platine und ein eigener Formkörper als Lichtleiter benötigt werden und dass diese Bauform nicht für Bedienelemente mit Stellschrauben geeignet ist.

Eine weitere Anordnung mit einem transparenten Formteil und einem Bedienelement ist aus der US 2002/0097569 bekannt.

Der Erfindung liegt deshalb die Aufgabe zu Grunde, für elektrische Einrichtungen mit wenigstens einer visuellen Anzeige und wenigstens einem Bedienelement der oben beschriebenen Art eine Verbesserung gegenüber dem Stand der Technik anzugeben.

Diese Aufgabe wird durch ein Formteil gemäß Patentanspruch 1 gelöst. Das angegebene Formteil vereint dabei mehrere Funktionen. Von einer Lichtquelle auf einer Schaltungsplatte wird ein Lichtstrahl an eine Lichtemissionsfläche des Formteils geleitet, wobei diese als visuelle Anzeige einer Gerätefunktion an einer Gehäuseoberfläche verwendet werden kann. Weiters ist das Formteil als Halterung für ein Bauteil ausgeprägt. Das ist vor allem für Bauteile vorteilhaft, die aufgrund ihrer Geometrie während eines Lötvorgangs nicht von selbst auf einer Schaltungsplatte in einer erforderlichen Position halten.

Insgesamt ergibt sich durch das erfindungsgemäße Formteil der Vorteil, dass neben einer erwünschten Lichtleitfunktion auch eine vereinfachte Montage eines in unmittelbarer Nähe angeordneten Bauteils und ein im Montagezustand stabiler Halt dieses Bauteils erreicht werden.

Dabei ist es vorteilhaft, wenn an die Halterung ein stabförmiges Element angefügt ist, dessen erstes Ende als Lichtaufnahmefläche über der Lichtquelle angeordnet ist und dessen zweites Ende als Lichtemissionsfläche durch eine Gehäuseöffnung geführt ist. Das von einer Lichtquelle, beispielsweise einer direkt auf der Schaltungsplatte angeordnete Leuchtdiode, abgegebene Licht wird dann über die Lichtaufnahmefläche in das stabförmige Element eingekoppelt und über Reflexionsflächen in dem stabförmigen Element an die Lichtemissionsfläche geführt. Dort wird das Licht als visuelle Anzeige für einen Benutzer oder das Betriebspersonal sichtbar.

Eine vorteilhafte Ausprägung der Erfindung ergibt sich dann, wenn das von der Halterung umhüllte Bauteil ein Bedienelement ist, welches eine Betätigungseinrichtung umfasst wobei die als Hülle ausgebildete Halterung über dieser Betätigungseinrichtung durchbrochen ist. Dabei können die von einem Benutzer oder dem Betriebspersonal auf die Betätigungseinrichtung ausgeübten Kräfte über das als Halterung ausgeprägte Formteil auf die Schaltungsplatte abgeleitet werden. Es ist damit sichergestellt, dass das Bedienelement stabil in seiner Position gehalten wird und elektrische Kontaktstellen zwischen Bedienelement und Schaltungsplatte nicht mit Scherspannungen belastet werden.

Vorteilhaft ist es des Weiteren, wenn der Durchbruch der Halterung über der Betätigungseinrichtung des Bedienelementes einen Kragen aufweist. Das von der Lichtquelle in das stabförmige Element des Formteils eingekoppelte Licht wird dann als Streulicht auch an diesen Kragen geleitet, wodurch die Stirnseite dieses Kragens als leuchtender Ring um die Betätigungseinrichtung des Bedienelements sichtbar wird. Für den Benutzer oder das Betriebspersonal erleichtert sich dadurch das Auffinden und Bedienen der Betätigungseinrichtung bei Einbaubedingungen mit unzureichender Beleuchtung, beispielsweise in Schaltschränken. Zudem erleichtert der Kragen die Zuführung eines Betätigungswerkzeugs, z.B. eines Schraubendrehers.

Eine günstige Anwendung ergibt sich, wenn das von der Halterung umhüllte Bedienelement ein Potentiometer ist und die Betätigungseinrichtung als Stellschraube ausgebildet ist. Potentiometer weisen in der Regel eine kleine Stellschraube auf, deren Auffinden und Bedienen durch die Beleuchtung erleichtert wird. Zudem macht die meist kubusartige Geometrie von Potentiometer mit dünnen Anschlussbeinchen auf der Schaltungsplatte eine Halterung notwendig, um die Position während des Lötvorgangs und bei Einwirkung von Kräften im Falle einer Betätigung der Stellschraube zu sichern.

Günstig ist es zudem, wenn als Material für das Formteil ein lichtdurchlässiges Synthetikharz, beispielsweise Polycarbonat, verwendet wird. Damit wird eine einfache Herstellung als Spritzgussteil möglich.

Die Erfindung wird anhand von Figuren näher erläutert. Es zeigen beispielhaft:
- Fig. 1:: eine Explosionsdarstellung eines Formteils mit einem Bauteil und einer Schaltungsplatte
- Fig. 2:: einen Formteil mit dem sich in ihm fortpflanzenden Licht
- Fig. 3:: einen Formteil zur Montage über Anschlussbeinchen eines Bauteils

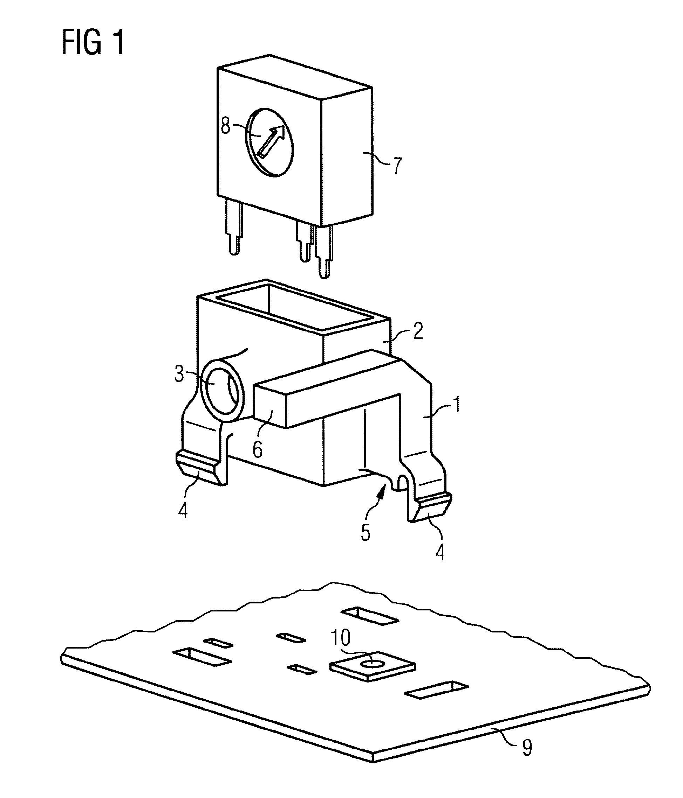

Das Formteil ist in Figur 1 im Schrägriss zwischen einer darunter liegend gezeichneten Schaltplatte 9 und einem darüber liegend gezeichneten Bauteil 7 dargestellt. Dabei ist das Formteil als Halterung 2 für das Bauteil 7 in der Art ausgebildet, dass die Halterung 2 als eine nach oben und unten offene Hülle für das Bauteil 7 fungiert. Die Innenfläche dieser Hülle und die Außenfläche des Bauteils 7 bilden dabei im montierten Zustand eine Spielpassung, die einen sicheren Halt gegen Querbewegungen des Bauteils 7 bewirkt. Die Halterung ist an der Stelle, wo im montierten Zustand die Betätigungseinrichtung 8 des Bauteils 7 liegt, durchbrochen, um einen ungehinderten Zugang zu der Betätigungseinrichtung 8 sicherzustellen. Der Durchbruch ist dabei von einem Kragen 3 umgeben. In einer elektronischen Einrichtung wie einem Schaltnetzteil wird dieser Kragen durch eine Öffnung im Gerätegehäuse geführt und weist so mit dem an der Kragenstirnseite austretenden Licht der Lichtquelle 10 auf die Position der Betätigungseinrichtung 8 hin.

An die als Hülle ausgebildete Halterung 2 ist ein stabförmiges Element 1 als Lichtleiter angefügt. Die Geometrie ist dabei in beispielhafter Weise annähernd L-förmig mit zwei kubusförmigen Abschnitten, wobei an der Verbindungsstelle dieser Abschnitte eine Abschrägung unter 45° als Reflexionsfläche vorgesehen ist. Es sind dabei auch andere Geometrien mit beliebig vielen Abschnitten und Reflexionsflächen möglich. Dabei empfiehlt es sich, die Kanten des stabförmigen Elements 1 mit Fasen zu versehen, um an diesen Kanten den Austritt von Streulicht zu verhindern.

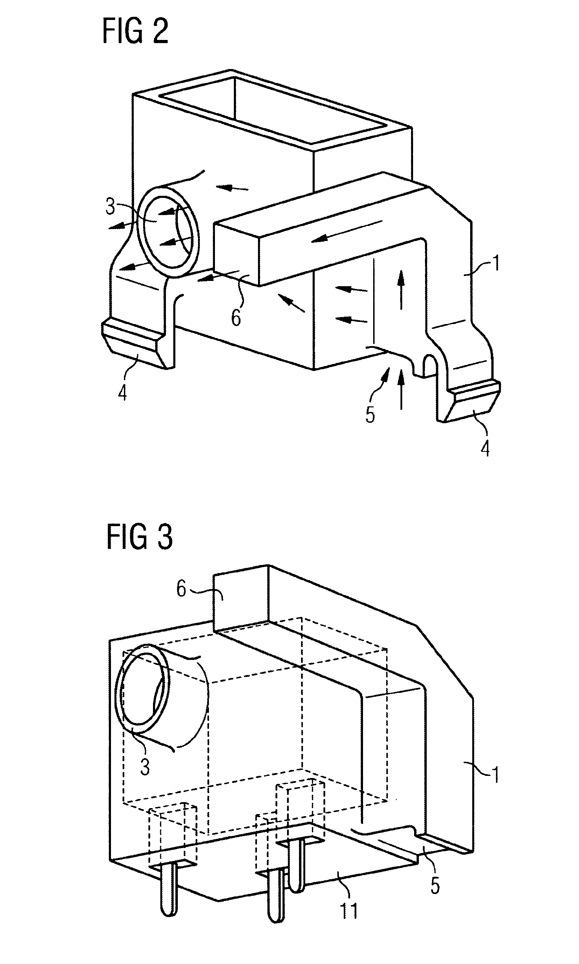

An das stabförmige Element 1 und die Halterung 2 anschließend sind zwei in Figur 1 sichtbare Fortsätze 4 und ein in Figur 1 verdeckter Fortsatz 4 angeordnet. Diese Fortsätze 4 weisen in Richtung Schaltungsplatte 9 und sind im montierten Zustand durch Durchbrüche in der Schaltungsplatte 9 geführt. Hakenförmige Ausprägungen an den Fortsätzen 4 bewirken dabei, dass diese an der Gegenseite der Schaltungsplatte 9 einrasten und so das Formteil auf der Schaltungsplatte 9 befestigen. Diese Befestigungsart ist beispielhaft und kann auch durch die in Figur 3 dargestellte oder z.B. durch Kleben ersetzt werden.

Die zur Vereinfachung ohne Leiterbahnen und sonstige Schaltungselemente in Figur 1 dargestellte Schaltungsplatte 9 weist beispielhafte Durchbrüchen auf, wobei davon drei zur Aufnahme der Fortsätze 4 des Formteils und drei zur Durchführung der Anschlussbeinchen des Bauteils 7 vorgesehen sind. Des Weiteren ist auf der Schaltungsplatte 9 eine Lichtquelle 10 als Leuchtdiode dargestellt. Im montierten Zustand befindet sich die Lichtaufnahmefläche 5 des Formteils direkt über dieser Lichtquelle 10. Wird die Lichtquelle 10 mit Strom versorgt, strahlt das abgegebene Licht über die Lichtaufnahmefläche 5 in das stabförmige Element 1, pflanzt sich in diesem durch Rexflexion fort und tritt an der Lichtemissionsfläche 6 wieder aus. Durch Streueffekte im Formteil gelangt dabei ein Teil des Lichts an die Stirnseite des Kragens 3, wodurch dieser als erleuchteter Ring sichtbar wird.

Das in Figur 1 dargestellte Bauteil 7 mit Betätigungseinrichtung 8 ist beispielhaft ein Potentiometer mit einer Stellschraube und drei in Richtung Schaltungsplatte 9 weisenden Anschlussbeinchen. Montiert werden die in Figur 1 dargestellten Elemente derart, dass das Formteil mit dem in ihm befindlichen Bauteil 7 auf die Schaltungsplatte aufgesteckt wird und auf dieser mit den Fortsätzen 4 einrastet. Davor wird auf die Schaltungsplatte die Lichtquelle 10 aufgebracht.

Das Bauteil 7 kann auch in den bereits auf der Schaltungsplatte montierten Formteil eingeführt werden. Die durch die Schaltungsplatte ragenden Anschlussbeinchen des Bauteils 7 werden dann auf der Gegenseite der Schaltungsplatte 9 mit Leiterbahnen verlötet. Das Betätigungselement 8 des Bauteils 7 ist im montierten Zustand durch den Durchbruch in der Halterung 2 zugänglich.

In Figur 2 ist das beispielhafte Formteil mit den sich in ihm fortpflanzenden Lichtstrahlen dargestellt, wobei die Lichtstrahlen schematisch als Pfeile eingezeichnet sind. An der Lichteintrittsfläche 5 strahlt das Licht ein. Der Großteil davon pflanzt sich durch das stabförmige Element 1 durch Reflexion bis zur Lichtemissionsfläche 6 fort und zeigt dort eine beliebige Funktion einer elektronischen Einrichtung an.

Mit kleineren Pfeilen ist das Streulicht dargestellt, das sich im ganzen Formteil fortpflanzt. Das Licht gelangt auch an die Stirnseite des Kragens 3.

Figur 3 zeigt ein beispielhaftes Formteil im Schrägriss mit einem sichtbaren Formteilboden 11, mit dem das Formteil auf der Schaltungsplatte 9 aufliegt. Dieser Formteilboden 11 weist Durchbrüche auf, durch die die Anschlussbeinchen eines im Formteil platzierten Bauteils 7 hindurchragen. Zur besseren Übersicht sind dabei nur die Umrisskanten des Formteilhohlraums zur Aufnahme des Bauteils 7 als unsichtbare gestrichelte Linien eingezeichnet. Bei sonstiger Entsprechung mit dem in Figur 1 dargestellten Formteil weist dieses in Figur 3 dargestellte Formteil zudem keine Fortsätze 4 zur Befestigung auf der Schaltungsplatte 9 auf.

Ein derart gestaltetes Formteil wird dann in einfacher Weise auf der Schaltungsplatte 9 montiert. Zunächst wird das Bauteil 7 in den Formteilhohlraum eingeführt. Die Hohlraumfläche und die Bauteiloberfläche bilden dabei wieder eine Spielpassung. Das Bauteil 7 liegt dann mit seiner unteren Fläche auf der Innenfläche des Formteilbodens 11 auf. Die Anschlussbeinchen des Bauteils 7 sind durch die Ausnehmungen im Formteilboden 11 geführt und ragen um mehr als die Dicke der Schaltungsplatte 9 aus diesem heraus.

Diese Einheit aus Formteil und Bauteil 7 wird dann auf die Schaltungsplatte 9 aufgesetzt, wobei die Anschlussbeinchen durch diese hindurch geführt und auf der Gegenseite der Schaltungsplatte 9 mit Leiterbahnen verlötet werden. Dabei wird in einem vorhergehenden Arbeitsschritt die Lichtquelle 10 auf die Schaltungsplatte 9 aufgesetzt.

Nach dem Löten fixieren die Lötstellen an den Bauteil-Anschlussbeinchen den Formteil mit dem Bauteil 7 auf der Schaltungsplatte 9 und halten somit gleichzeitig das stabförmige Element 1 über der Lichtquelle 10 in Position. Über die große Auflagefläche des Formteilbodens 11 können bei einer derartigen Befestigung auch Querkräfte auf Betätigungseinrichtungen 8 des Bauteils 7 in die Schaltungsplatte 9 abgeleitet werden, wobei durch eine Hebelwirkung auf die Anschlussbeinchen im Wesentlichen unproblematische Zugkräfte wirken.

## Patentansprüche

1. Anordnung umfassend ein Formteil aus transparentem Material und ein auf einer Schaltungsplatte (9) angebrachtes Bauteil (7), welches ein Betätigungselement (8) umfasst, wobei das Formteil zum Leiten eines Lichtstrahls von einer, auf der Schaltungsplatte (9) angebrachten Lichtquelle (10) vorgesehen ist, **dadurch gekennzeichnet, dass** das Formteil auf der Schaltungsplatte befestigt ist und eine Halterung (2) umfasst, welche das mittels Anschlussbeinchen auf der Schaltungsplatte (9) angebrachte Bauteil (7) aufnimmt und dass diese Halterung (2) als eine das Bauteil (7) umgebende, in einer vorgegebenen Position haltende Hülle mit einer Öffnung zum Anbringen des Bauteils (7) auf der Schaltungsplatte (9) ausgebildet ist, sodass die Halterung das Bauteil (7) gegenüber der Schaltungsplatte während eines Lötvorgangs in Position hält und dass die Halterung (2) zusätzlich einen Durchbruch aufweist, um das Betätigungselement (8) zugänglich zu machen.

2. Anordnung nach Anspruch 1, **dadurch gekennzeichnet, dass** an die Halterung (2) ein stabförmiges Element (1) angefügt ist, dessen erstes Ende als Lichtaufnahmefläche (5) über der Lichtquelle (10) angeordnet ist und dessen zweites Ende als Lichtemissionsfläche (6) durch eine Gehäuseöffnung geführt ist.

3. Anordnung nach Anspruch 1 oder 2, **dadurch gekennzeichnet, dass** das von der Halterung (2) umhüllte Bauteil (7) ein Bedienelement ist, welches eine Betätigungseinrichtung (8) umfasst und dass die als Hülle ausgebildete Halterung (2) über dieser Betätigungseinrichtung (8) durchbrochen ist.

4. Anordnung nach Anspruch 3, **dadurch gekennzeichnet, dass** der Durchbruch der Halterung (2) über der Betätigungseinrichtung (8) des Bedienelementes einen Kragen (3) aufweist.

5. Anordnung nach Anspruch 3 oder 4, **dadurch gekennzeichnet, dass** das von der Halterung (2) umhüllte Bedienelement ein Potentiometer ist und die Betätigungseinrichtung (8) als Stellschraube ausgebildet ist.

6. Anordnung nach einem der Ansprüche 1 bis 5, **dadurch gekennzeichnet, dass** das Formteil aus einem lichtdurchlässigen Synthetikharz besteht.

## Claims

1. Arrangement including a moulded part made of transparent material and a component (7) attached to a printed circuit board (9), said component (7) including an actuation element (8), wherein the moulded part is provided to guide a light beam from a light source (10) attached to the printed circuit board (9), **characterised in that** the moulded part is fastened to the printed circuit board and includes a support (2), which receives the component (7) attached to the printed circuit board (9) by means of connection limbs and that this support (2) is embodied as a sleeve surrounding the component (7) and holding the same in a predetermined position, having an opening for attaching the component (7) to the printed circuit board (9), so that the support holds the component (7) in position relative to the printed circuit board during a soldering process and that the support (2) also comprises a cut-out, in order to make the actuation element (8) accessible.

2. Arrangement according to claim 1, **characterised in that** a rod-shaped element (1) is added to the support (2), the first end of which is arranged as a light absorbing surface (5) across the light source (10) and the second end of which is guided as a light emission surface (6) through a housing opening.

3. Arrangement according to claim 1 or 2, **characterised in that** the component (7) surrounded by the support (2) is a control element, which includes an actuation facility (8) and that the support (2) embodied as a sleeve is cut out over this actuation facility (8).

4. Arrangement according to claim 3, **characterised in that** the cut-out of the support (2) comprises a collar (3) over the actuation facility (8) of the control element.

5. Arrangement according to claim 3 or 4, **characterised in that** the control element surrounded by the support (2) is a potentiometer and the actuation facility (8) is embodied as an adjustable screw.

6. Arrangement according to one of claims 1 to 5, **characterised in that** the moulded part consists of a light-permeable synthetic resin.

## Revendications

1. Agencement comprenant une pièce moulée en matériau transparent et un élément ( 7 ) qui est mis sur une plaquette ( 9 ) à circuit imprimé et qui comprend un élément ( 8 ) d'actionnement, la pièce moulée étant prévue pour conduire un faisceau lumineux d'une source ( 10 ) lumineuse mise sur la plaquette ( 9 ) à circuit imprimé, **caractérisé en ce que** la pièce moulée est fixée sur la plaquette à circuit imprimé et comprend une fixation ( 2 ) qui reçoit l'élément ( 7 ) mis sur la plaquette ( 9 ) à circuit imprimé au moyen de pattes de raccordement et **en ce que** cette fixation ( 2 ) est constituée sous la forme d'un manchon qui entoure l'élément ( 7 ), qui retient dans une position prescrite et qui a une ouverture pour mettre l'élément ( 7 ) sur la plaquette ( 9 ) à circuit imprimé de manière à ce que la fixation maintienne l'élément ( 7 ) en position contre la plaquette à circuit imprimé pendant une opération de soudage et **en ce que** la fixation ( 2 ) a en outre une traversée pour rendre accessible l'élément ( 8 ) d'actionnement.

2. Agencement suivant la revendication 1, **caractérisé en ce que** à la fixation ( 2 ) est adjoint un élément ( 1 ) en forme de barre, dont la première extrémité est disposée comme surface ( 5 ) d'absorption de la lumière au-dessus de la source ( 10 ) lumineuse et dont la deuxième extrémité passe en tant que surface ( 6 ) d'émission de lumière dans une ouverture de boîtier.

3. Agencement suivant la revendication 1 ou, **caractérisé en ce que** l'élément ( 7 ) enveloppé par la fixation ( 2 ) est un élément de commande qui comprend un dispositif ( 8 ) d'actionnement et **en ce que** la fixation ( 2 ) constituée en enveloppe est traversée par cet élément ( 8 ) d'actionnement.

4. Agencement suivant la revendication 3, **caractérisé en ce que** la traversée de la fixation ( 2 ) a un collet ( 3 ) sur le dispositif ( 8 ) d'actionnement de l'élément de commande.

5. Agencement suivant la revendication 3 ou 4, **caractérisé en ce que** l'élément de commande enveloppé de la fixation ( 2 ) est un potentiomètre et le dispositif ( 8 ) d'actionnement est constitué sous la forme d'une vis de réglage.

6. Agencement suivant l'une des revendications 1 à 5, **caractérisé en ce que** la pièce moulée est en une résine synthétique perméable à la lumière.
